Europäisches Patentamt

European Patent Office

Office européen des brevets

(19)

(11) **EP 1 420 281 A2**

(12) **EUROPÄISCHE PATENTANMELDUNG**

(43) Veröffentlichungstag:
**19.05.2004 Patentblatt 2004/21**

(51) Int Cl.⁷: **G02B 21/00**

(21) Anmeldenummer: 03025215.9

(22) Anmeldetag: **05.11.2003**

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**AL LT LV MK**

(30) Priorität: **15.11.2002 DE 10254139**

(71) Anmelder: **CARL ZEISS JENA GmbH**
**07745 Jena (DE)**

(72) Erfinder: **Wolleschensky, Ralf**
**99510 Apolda (DE)**

(54) **Verfahren und Anordnung zur tiefenaufgelösten optischen Erfassung einer Probe**

(57) Beleuchtungslichtverteilung mindestens einer Wellenlänge und Detektion insbesondere des aufgrund von Wechselwirkung mit der Probe beeinflußten Lichtes, insbesondere Fluoreszenzlichtes und / oder reflektierten Lichtes und / oder Lumineszenzlichtes und / oder gestreuten und / oder transmittierten Lichtes,
wobei das Beleuchtungslicht eine Modulation in zumindest einer Raumrichtung aufweist und das wie das Beleuchtungslicht modulierte Detektionslicht in zwei Anteile, die zueinander eine Phasenverschiebung aufweisen, räumlich aufgeteilt wird,
diese getrennt vermessen werden und aus ihnen ein optisches Schnittbild der Probe und/ oder eines Probenteils berechnet wird.

A.)

Anregungsstrahlengang

Detektionsstrahlengang

Abb. 2

EP 1 420 281 A2

**Beschreibung**

Die Erfindung bezieht sich auf ein Verfahren und eine Anordnung in der Mikroskopie, insbesondere der Fluoreszenzmikroskopie zur Untersuchung von vorwiegend biologischen Proben, Präparaten und zugehörigen Komponenten. Mit eingeschlossen sind auf Fluoreszenzdetektion basierende Verfahren zum Screenen von Wirkstoffen (High Throughput Sceening). Simultan-Untersuchungen von Fluoreszenzproben in Echtzeit durch eine simultane Beleuchtung der Probe in mehreren Probenpunkten werden möglich.

Ein klassisches Anwendungsgebiet der Lichtmikroskopie zur Untersuchung von biologischen Präparaten ist die Fiuoreszenzmikroskopie (Lit.: Pawley, "Handbook of biological confocal Microscopy"; Plenum Press 1995). Hierbei werden bestimmte Farbstoffe zur spezifischen Markierung von Zellteilen verwendet.

Die eingestrahlten Photonen einer bestimmten Energie regen die Farbstoffmoleküle durch die Absorption eines Photons aus dem Grundzustand in einen angeregten Zustand an. Diese Anregung wird meist als Einphotonen-Absorption bezeichnet. Die so angeregten Farbstoffmoleküle können auf verschiedene Weise in den Grundzustand zurückgelangen. In der Fluoreszenzmikroskopie ist der Übergang unter Aussendung eines Fluoreszenzphotons am wichtigsten.

Die Wellenlänge des emittierten Photons ist aufgrund der Stokesverschiebung im Vergleich zur Anregungsstrahlung generell rot verschoben, besitzt also eine größere Wellenlänge. Die Stokesverschiebung ermöglicht die Trennung der Fluoreszenzstrahlung von der Anregungsstrahlung.

Das Fluoreszenzlicht wird mit geeigneten dichroitischen Strahlteilern in Kombination mit Blockfiltern von der Anregungsstrahlung abgespalten und getrennt beobachtet. Dadurch ist die Darstellung einzelner, mit verschiedenen Farbstoffen eingefärbten Zellteilen, möglich. Grundsätzlich können jedoch auch mehrere Teile eines Präparates gleichzeitig mit verschiedenen sich spezifisch anlagernden Farbstoffen eingefärbt werden (Mehrfachfluoreszenz).

Zur Unterscheidung, der von den einzelnen Farbstoffen ausgesendeten Fluoreszenzsignale, werden wiederum spezielle dichroitischen Strahlteiler verwendet.

Neben der Anregung der Farbstoffmoleküle mit einem hoch energetischen Photon (Einphotonen-Absorption) ist auch eine Anregung mit mehreren Photonen geringerer Energie möglich. Die Summe der Energien der Einzelphotonen entspricht hierbei ungefähr einem Vielfachen des hochenergetischen Photons. Diese Art der Anregung der Farbstoffe wird als Mehrphotonen-Absorption bezeichnet (Lit.: Corle, Kino; "Confocal Scanning Optical Microscopy and Related Imaging Systems"; Academic Press 1996). Die Farbstoffemission wird durch diese Art der Anregung jedoch nicht beeinflußt, d.h. das Emissionsspektrum erfährt bei der Mehrphotonen-Absorption einen negativen Stokesshift, besitzt also eine geringere Wellenlänge im Vergleich zur Anregungsstrahlung. Die Trennung der Anregungs- von der Emissionsstrahlung erfolgt in der gleichen Art und Weise wie bei der Einphotonen-Absorption.

In einem Verfahren nach dem Stand der Technik, der sogenannten strukturierten Beleuchtung, nutzt man die Modulationstiefe der optischen Abbildung einer Amplitudenstruktur (z.B. Gitter) als Kriterium für die Tiefenschärfe. Das Bild der periodischen Struktur zeichnet sich durch die Frequenz der Modulation und die Phasenstellung (Bildphase) der Modulation aus. Durch eine Phasenverschiebung der Struktur senkrecht zur optischen Achse können unterschiedliche Projektionsszenarien erhalten werden. Um streifenfreie, tiefendiskriminierte optische Schnitte berechnen zu können, werden im allgemeinen mindestens 3 Phasenbilder PB bei 0°, 120° und 240° benötigt. Diese Phasenbilder (PB) werden anschließend zu einem (konfokalen) optischen Schnittbild in einem Image Prozessor mit folgender Formel verrechnet:

$$I_{Section}(x) = Const \cdot \sqrt{(I(x,0°) - I(x,120°))^2 + (I(x,120°) - I(x,240°))^2 + (I(x,0°) - I(x,240°))^2} \, ,$$

wobei I(x, Winkel) die Intensität am jeweiligen Pixel in dem entsprechenden Phasenbild beschreibt.

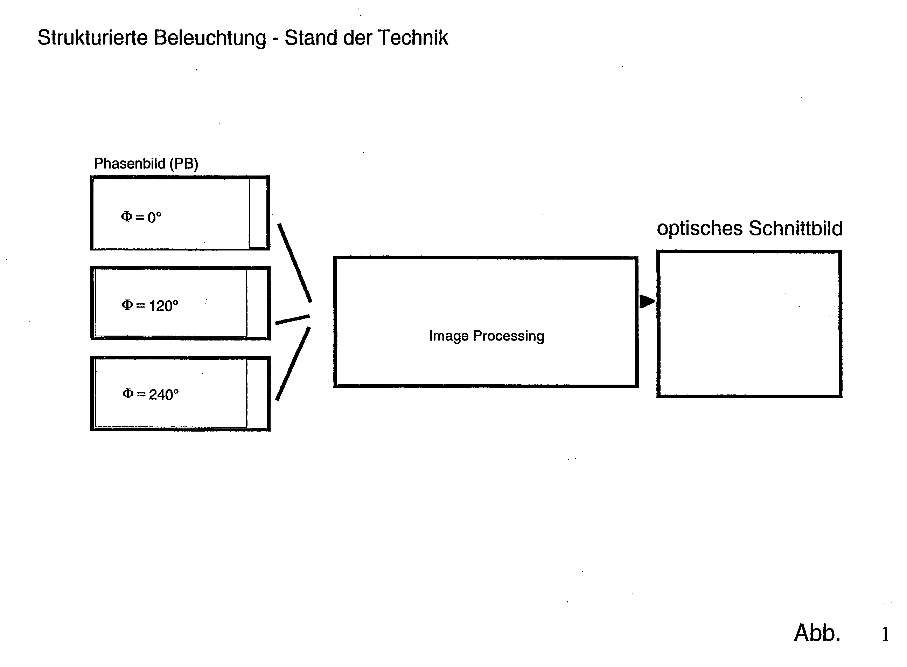

Der Messablauf zur Generierung eines optischen Schnittbildes ist in Abb. 1 schematisch dargestellt. Die Aufzeichnung der 3 oder mehr Phasenbilder erfolgt im einfachsten Falle sequentiell. Dabei wird davon ausgegangen, dass sich die Probe während der Messung der Bilder nicht bewegt. Die so aus den Phasenbildern berechneten Schnittbilder bzw. Schnittstapel können anschließend mittels 3-D Auswertesoftware auf einem Standard PC und Monitor dargestellt werden.

Die Ortsauflösung entlang der optischen Achse hängt von der Wellenlänge des Lichtes, der numerischen Apertur des Objektivs und der Modulationsfrequenz ab.

Für eine detaillierte Beschreibung des Berechnungsalgorithmus wird auf T. Wilson et al.; "Method of obtaining optical sectioning by using structured light in a conventional microscope"; Optics Letters 22 (24) 1997 sowie WO9706509 verwiesen.

Von einem dreidimensional ausgeleuchteten Bild wird in Verbindung mit der entsprechenden Einphotonen bzw. Mehrphotonen-Absorption nur die Ebene (optischer Schnitt) wiedergegeben, die sich in der Fokusebene des Objektivs befindet. Durch die Aufzeichnung mehrerer optische Schnitte in der x-y Ebene in verschiedenen Tiefen z der Probe kann anschließend rechnergestützt ein dreidimensionales Bild der Probe generiert werden.

Die strukturierte Beleuchtung ist somit zur Untersuchung von dicken Präparaten geeignet. Die Anregungswellenlängen werden durch den verwendeten Farbstoff mit seinen spezifischen Absorptionseigenschaften bestimmt. Auf die Emissionseigenschaften des Farbstoffes abgestimmte dichroitische Filter stellen sicher, daß nur das vom jeweiligen Farbstoff ausgesendete Fluoreszenzlicht vom Punktdetektor gemessen wird.

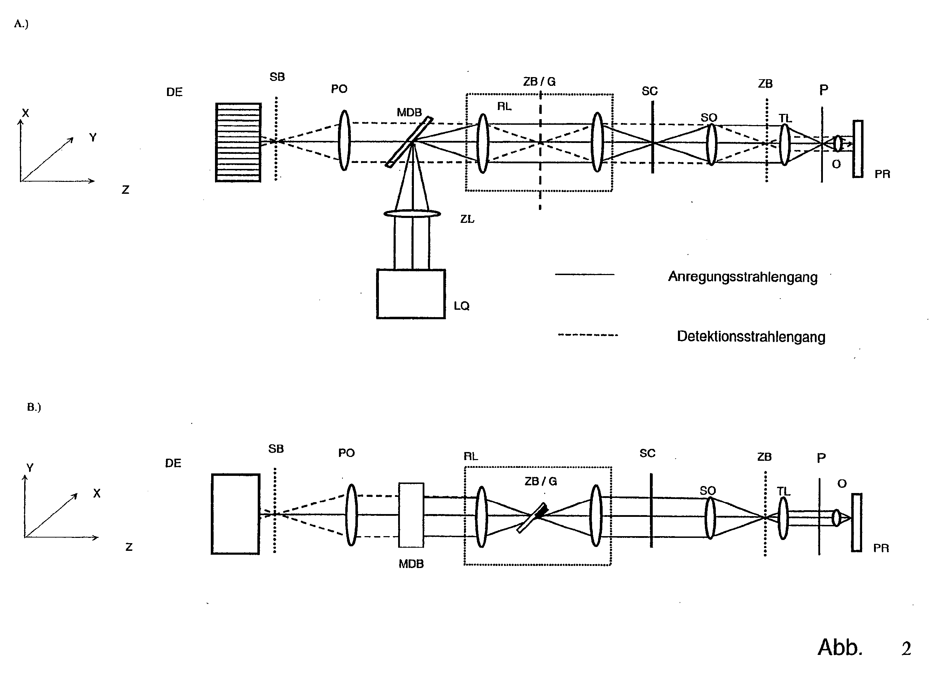

Durchflußzytometer dienen der Untersuchung und der Klassifikation von Zellen und anderen Partikeln. Die Zellen befinden sich hierzu in einer Flüssigkeit gelöst und werden durch eine Kapillare gepumpt. Zur Untersuchung der Zellen wird ein Laserstrahl von der Seite in die Kapillare fokussiert. Die Zellen sind mit verschiedenen Farbstoffen oder fluoreszierenden Biomolekülen gefärbt. Gemessen wird das angeregte Fluoreszenzlicht und das rückgestreute Anregungslicht. Die Trennung des Fluoreszenzsignals der Probe von dem Anregungslicht erfolgt mittels dichroitischen Strahlteilern (MDB siehe Abb. 2). Der Stand der Technik ist in "Flow Cytometry and Sorting", Second Edition, M.R. Melamed, T. Lindmo, M.L. Mendelsohn, Eds. Wiley & Sons, Inc. New York, 1990, pp 81-107 beschrieben.

Aus dem rückgestreuten Signal kann die Größe der Zellen bestimmt werden. Mit Hilfe der Spektraleigenschaften der Fluoreszenz einzelner Zellen können verschiedene Zellen separiert/sortiert oder getrennt gezählt werden. Die Sortierung der Zellen erfolgt mit einem elektrostatischen Feld in verschiedene Kapillaren. Das Ergebnis, d.h. z.B. die Anzahl der Zellen mit Farbstoff A im Vergleich zu Zellen mit Farbstoff B wird häufig in Histogrammen dargestellt.

Die Durchflußgeschwindigkeit beträgt typischerweise einige 10-100 cm/s. Deshalb wird eine hochempfindliche Detektion benötigt. Zur Einschränkung des Detektionsvolumens erfolgt nach dem Stand der Technik eine konfokale Detektion.

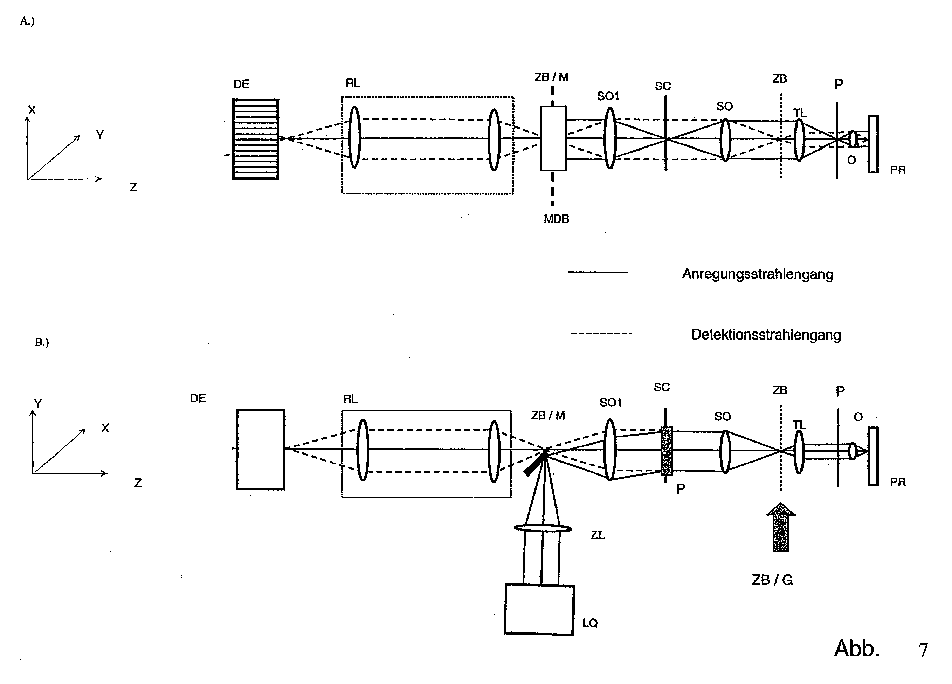

Anordnungen zum Screenen von Farbstoffen wie z.B. in so genannten Chipreadern ähneln in ihrem optischen Aufbau einem Laser Scanning Mikroskop. Sie scannen jedoch ein deutlich größeres Bildfeld zur Untersuchung der makroskopischen Proben, beispielsweise Screenen von Wirkstoffen auf einem Biochip. Die Kantenlänge der Scanfelder betragen hierbei einige 10 mm. Diese Scanfelder können z.B. durch eine Vergrößerung der Scanwinkel der Galvoscanner, durch eine Anordnung der Probe in einem Zwischenbild der Mikroskopanordnung beispielhaft in Fig. 7A oder durch eine spezielle Objektivanordnung (Makroobjektiv), die das Zwischenbild vergrößert auf die Probe abbildet, erzielt werden.

Nachteilig beim Stand der Technik ist es, dass mehrere Bilder sequentiell aufgezeichnet, ausgelesen und verrechnet werden müssen. Dies erfordert insbesondere höhere Anforderungen an die Einstelleinheit für die verschiedenen Projektionsszenarien, da sonst Restmodulationen (Reststrukturen) im Bild verbleiben. Zusätzlich verringert sich die Geschwindigkeit bei Aufnahme von 3 Phasenbildern um einen Faktor 3 mit der konfokale Schnittbilder erzeugt werden können. Weiterhin wird je nach Stärke des nichtkonfokalen Hintergrundsignales der Probe (d.h. Signale außerhalb der Fokusebene) der nutzbare Dynamikbereich des Detektors eingeschränkt.

Mit Hilfe der erfindungsgemäßen Anordnungen wird es möglich die optischen Schnittbilder schon am Detektor zu erzeugen. Somit wird verhindert, dass der Dynamikbereich des Detektors durch nichtkonfokale Hintergrundsignale eingeschränkt wird. Ein sequentielles Aufzeichnen und Auslesen der Phasenbilder zur Verrechnung im PC ist nicht mehr nötig, wodurch die Geschwindigkeit des Detektors vollständig zur Aufnahme von konfokalen Schnittbildern zur Verfügung steht. Das Entstehen von Restmodulationen im konfokalen Schnittbild wird vermieden.

Die erfindungsgemäße Lösung ist in bildgebenden wie in analytischen Mikroskopiersystemen einsetzbar.

**Beschreibung der Erfindung**

Abb. 2A (Seitenansicht) und B (Draufsicht) zeigt schematisch die erfindungsgemäße Anordnung für einen Linienscanner. Die durchgezogenen Linien im Strahlengang stellen den Beleuchtungsstrahlengang dar, die gestrichelten den Detektionsstrahlengang. Bei einem Linienscanner wird die Probe mit einem Linienfokus z.B. entlang der X-Koordinate beleuchtet, die in der Koordinate senkrecht zur Linie verschoben wird. Hierzu wird die Lichtquelle LQ (Teilbild A), die sowohl eine als auch mehrere Wellenlängen ausstrahlen kann als auch Wellenlängenbänder oder eine Weisslichtquelle sein kann, in eine Zwischenbildebene ZB der Mikroskopeinrichtung mittels einer Optik ZL ist Zylinderlinse und RL ist Übertragungslinse linienförmig fokussiert. Durch die Fokussierung in Y- Richtung in das zweite Zwischenbild ZB/G, wobei G ein Amplitudengitter ist, ergibt sich eine beugungsbegrenzte linienförmige Intensitätsverteilung entlang der X Koordinate auf der Probe PR nach Durchlaufen des Scanners SC, einer Scanoptik SO, einer Tubuslinse TL und eines Objektives O. P ist eine Pupille der Mikroskopanordnung. Die linienförmige Intensitätsverteilung entlang X auf der Probe kann weiterhin durch diffraktive oder holographische Elemente nach dem Stand der Technik (Lit.: "Diffractive optics improve product design", Photonics Spectra, Laurin Publishing Co., Inc. September 1995) erfolgen. Hierzu wird das diffraktive Element in einer Pupille der Mikroskops vorzugsweise im Anregungsstrahlengang angeordnet. Weiterhin kann eine so genannte Powell Linse, wie sie in US 4,826,299 beschrieben ist, eingesetzt werden. Letzteres Element erzeugt im Vergleich zur Zylinderlinse bei gaussförmiger Beleuchtungsintensitätsverteilung, wie sie z.B. für singlemodige Laser typisch ist, eine homogenere Intensitätsverteilung entlang der Linie. Die Powell Linse und die diffraktiven bzw. holographischen Elemente werden hierzu beispielsweise in einer Pupillenebene der Mikroskopvorrichtung besonders vorteilhaft zwischen Lichtquelle und Scanner angeordnet. Mit der Relayoptik RL wird das Licht in die Pupille SC der Mikroskopanordnung abgebildet. In den Pupillenebenen P, SC und MDB der Mikroskopanordnung ergeben sich jeweils ein Linienfokus entlang der Y -Achse. Die Pupillenebenen SC und die Ebene, in der sich der Hauptfarbteiler MDB befindet, sind zueinander und zur rückwärtigen Brennebene des Objektiv (P) konjugierte Pupillenebenen der Mikroskopanordnung, so dass der Scanner die linienförmige und beugungsbegrenzt fokussierte Intensitätsverteilung senkrecht zu dieser bewegen kann (y-Koordinate in der Probe). Die Abbildung von ZB in die Probe erfolgt über die Scanoptik (SO), die Tubuslinse (TL) und das Objektiv (O). Die Relayoptik (RL) erzeugt die konjugierten Pupillenebenen MDB und SC der Mikroskopanordnung. Die Relayoptik kann in speziellen Anordnungen nach dem Stand der Technik auch weggelassen werden. Z.B. kann sie bei einer Verkürzung des Abstandes zwischen MDB und SC entfallen. Weiterhin kann auch direkt das Element MDB in SC, angebracht auf einem Scanner, zum Scannen des Linienfokus in Y-Richtung verwendet werden. Bei dieser Anordnung kann die Relayoptik und damit die Pupillenebene MDB komplett entfallen. Die transmittive Optik ZL zur Formung der Linie kann prinzipiell auch durch ein reflektives Element z.B. Zylinderspiegel ersetzt werden, dessen Brennpunkt auf MDB liegt. Der Zylinderspiegel wird dann (nicht dargestellt) unter 45° in der in Abb. 7A gezeichneten xz-Ebene angeordnet. In dieser Ebene besitzt der Spiegel auch seine fokussierende Wirkung. Weiterhin wird durch den Spiegel der Strahlweg zur Lichtquelle um 90° abgewinkelt.

Der Beobachtungsstrahlengang in Rückrichtung zu einem Detektor DE (Ortsauflösend), z.B. bei einer Fluoreszenzanregung, ist gestrichelt eingezeichnet. Aufgrund der Art der Probenwechselwirkung z.B. bei einer Fluoreszenz- oder Lumineszenzanregung ist das von der Probe emittierte Licht von geringer räumlicher Kohärenz. D.h. jeder in der Probe angeregte Punkt strahlt im wesentlichen unabhängig von den benachbarten Punkten als Punktstrahler in alle Raumrichtungen ab. Die Optik O (z.B. ein Mikroskopobjektiv) bildet die einzelnen Punktstrahler gemeinsam mit der Tubuslinse TL in eine Zwischenbildebene ZB der Mikroskopeinrichtung ab, wobei die Pupille P gleichförmig von zueinander im wesentlichen inkohärenten Wellenfronten verschiedener Ausbreitungsrichtung ausgeleuchtet wird (gestrichelter Strahlengang). Im Anschluß wird das Licht der Probe mit Hilfe einer abbildenden Optik (PO) bei konfokaler Detektion durch eine Schlitzblende (SB) (Lage - Schlitz Längsrichtung in X-Richtung auf der Zeichnung) fokussiert, wodurch Detektionslicht, das außerhalb des Fokus entstand, unterdrückt wird. Hinter der Schlitzblende befindet sich ein Zeilenoder Flächendetektor (DE) (Lage der Zeile in X-Richtung) der ortsaufgelöst (entlang des Linienfokus), der die in der Probe angeregte und/oder rückgestreute Lichtstrahlung detektiert. Der Linienfokus wird mit dem Galvoscanner SC in einer Raumrichtung abgerastert. Bei Aufnahme einer Fluoreszenz oder Lumineszenz wird zur Unterdrückung des von der Probe rückgestreuten Anregungslichts ein Emissionsfilter im Detektionsstrahlengang vorzugsweise zwischen PO und SB (dichroitischer Filter) F eingeschwenkt.

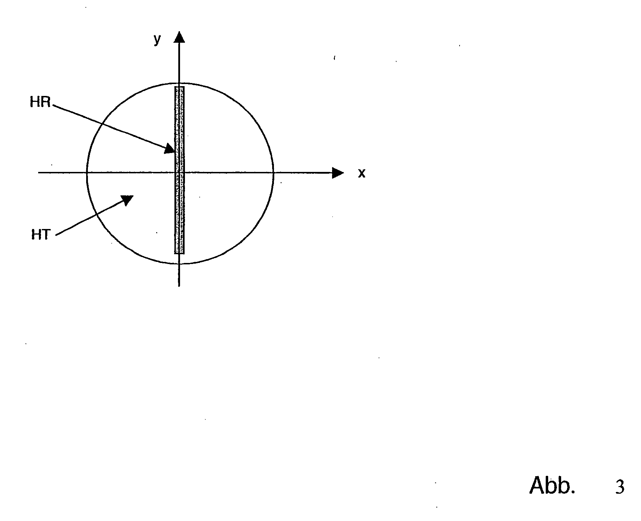

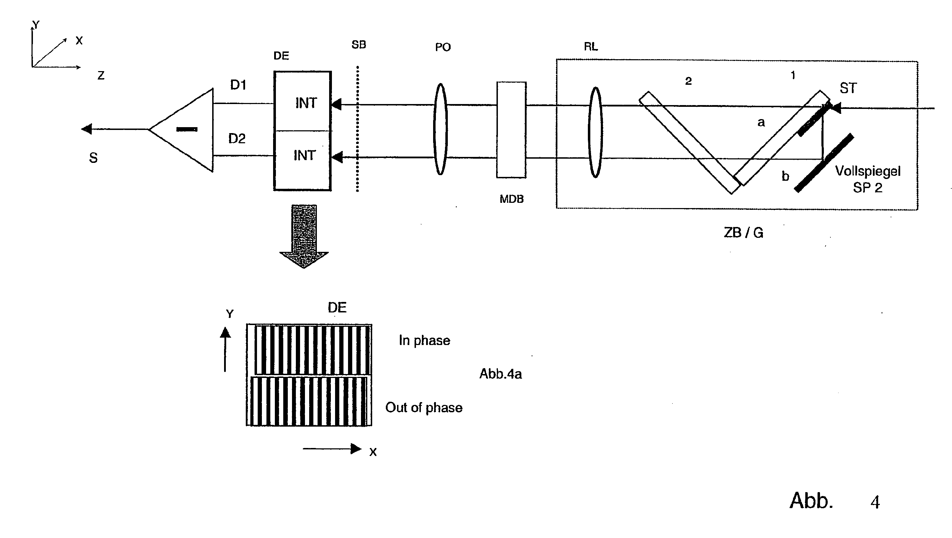

Die Erläuterung der Komponeten MDB und ZB/G erfolgt anhand von Abb. 3 und 4.

In der Pupille MDB befindet sich das in Abb. 3 dargestellte Element MDB, welches die Trennung des Anregungs- vom Detektionslicht vornimmt. Aus Gründen der Veranschaulichung ist das Element MDB vergrößert dargestellt. MDB ist in dem grau gezeichneten Bereich HR voll verspiegelt. Der weiß gezeichnete Bereich HT ist hoch transmittierend insbesondere für den Wellenlängenbereich in dem die Probenanregung erfolgen soll. Die äußere Berandung des MDB stellt den Pupillendurchmesser der Mikroskopeinheit dar. Im einfachsten Falle kann der HR Bereich ein schmaler Spiegel sein, der für die Einspiegelung der Linie ausreicht. Auf den HR Bereich wird erfindungsgemäß das Anregungslicht fokussiert. Das von der Probe auf direktem Wege reflektierte Licht gelangt wiederum insbesondere auf den HR Bereich zur Lichtquelle. Das in der Probe diffus gestreute Anregungslicht und / oder angeregte Licht treffen MDB entsprechend der Pupillengröße der Mikroskopoptik auf seiner gesamten Fläche, wobei der auf den HT Bereich treffende Anteil zur Beobachtung im Zwischenbild SB/DE gelangt. Es geht bei dieser Anordnung an MDB nur der auf den HR Bereich fallende Anteil der Detektionsstrahlung verloren. Das Verhältnis der Flächen von HT zu HR beträgt:

$$R = \frac{A_{Pupille} - A_{HT}}{A_{Pupille}} = \frac{\pi \cdot r_{Pupille} - b_{HT}}{\pi \cdot r_{Pupille}},$$

wobei der Pupillenradius für den HT Bereich in einem Mikroskop typischerweise ca. 5 mm und die Breite des HR Bereich ca. bHT<0.25 mm betragen. Somit ergibt sich das Verhältnis und damit für die Effizienz der Strahlaufteilung von MDB wellenlängenunabhängig R=97%.

Am Ort ZB/G in Abb. 2 ( Zwischenbild) befindet sich in 2B eine Gitterstruktur G. Das Gitter G weist abwechselnd Bereiche hoher Transmission und hoher Reflektivität vorzugsweise ein periodisches Rechteckgitter oder Sinusgitter auf. Die Gitterlinien befinden sich entlang der Y Achse, also quer zur durch ZL erzeugten Linie . Das Gitter ist in der yz Ebene (Teilbild B.Abb.2) um vorzugsweise 45° zur X-Achse verkippt angeordnet und vorzugsweise wird vom Anregungs- und vom Detektionslicht durchlaufen. Es sind auch andere Kippwinkel denkbar, die eine räumliche Aufspaltung in Teilstrahlen a und b ermöglichen. Dem Anregungslicht wird daher entlang der Scanlinie eine Struktur aufgeprägt. Abb. 4a zeigt schematisch eine beispielhafte Anordnung des Gitters im ZB/G. Detektionslicht aus dem Fokusbereich gelangt hierbei in Pfeilrichtung auf das Gitter mit der Struktur ST vorrangig auf die Regionen in denen das Gitter hoch transmittiv ist, da dieses Detektionslicht auf dem Rückweg in Richtung Detektor wieder scharf am Ort der Struktur ST abgebildet wird. Hingegen Detektionslicht aus Regionen der Probe, die außerhalb des Fokus liegen gelangt gleichmäßig verteilt auf die verspiegelten und unverspiegelten Regionen, da es nicht scharf auf die Struktur ST abgebildet wird. Die Struktur ST wirkt also für das Detektionslicht aus dem Fokus wie eine Blende, wodurch Signale von außerhalb des Fokus zu mindestens 50% unterdrückt werden. Durch die Wirkung der Struktur ST wird das entlang der Beleuchtungszeile modulierte Detektionslicht in zwei Anteile zerlegt, deren periodische Strukturen zueinander einen Phasenshift von Pi aufweisen. Die beiden Anteile werden im folgenden auch in-Phase-Anteil a und außer-Phase-Anteil b genannt. Vorzugsweise der außer-Phase Anteil gelangt über einen Vollspiegel SP2 in Richtung des Detektorabschnittes D2 und der in-Phase Anteil auf den Detektorabschnitt D1. Der In-Phase-Anteil a trägt hierbei das Signal aus dem konfokalen Schnittbild A plus einem Hintergrundsignal B multipliziert (Formel siehe unten) mit dem In-Phase-Anteil der Struktur ST. Der Außer-Phase-Anteil b trägt das Signal aus dem konfokalen Schnittbild A plus das Hintergrundsignal B multipliziert (Formel siehe unten) mit dem Außer-Phase-Anteil der Struktur ST. Beide Anteile werden durch die Pinholeoptik PO auf zwei Detektorzeilen DE abgebildet. Der Bildausschnitt in Abb. 4a zeigt den Detektor DE mit den beiden Zeilen. Schematisch eingezeichnet ist der in-Phase und außer-Phase Anteil der abgebildete Struktur ST entlang der x-Achse.

Die Erläuterung der Meßgrößen soll im folgenden unter Annahme einer cosinusförmigen Strukturierung der Scanlinie mit einer Periode k entlang der x-Achse erfolgen, da sich hierdurch die Ableitung der analytischen Ausdrücke vereinfacht. Eine Übertragung auf andere Strukturierungen ist ohne Einschränkung möglich. Für das Signal der Probe F(x), den In-Phase D1(x) und den Außer-Phase-Anteil D2(x) entlang der x-Achse ergeben sich bei Annahme einer cosinusförmigen Strukturierung:

*Signal der* Pr *obe* :

$$F(x) = B(x) + A(x) \cdot (\cos(k \cdot x) + 1)$$

*In - Phase - Anteil* :

$$D_1(x) = F(x) \cdot (\cos(k \cdot x) + 1)$$

*Außer - Phase - Anteil* :

$$D_2(x) = F(x) \cdot (\sin(k \cdot x) + 1)$$

Bei Betrachtung eines Probenpunktes wird dieser Probenpunkt bei Verschiebung der Struktur entlang der Scanlinie verschieden hell beleuchtet. Bei einer gleichmäßigen z.B. auch periodischen Verschiebung der Struktur überträgt sich die cosinusförmige Struktur entlang der Scanlinie in eine cosinusförmige zeitliche Modulation des Probensignals, wodurch sich folgender Ausdruck ergibt:

*Signal der* Pr *obe* :

$$F(x,\tau) = B(x) + A(x) \cdot (\cos(k \cdot \tau) + 1)$$

*In - Phase - Anteil* :

$$D_1(x, \tau) = F(x) \cdot (\cos(k \cdot \tau) + 1)$$

*Außer - Phase - Anteil* :

$$D_2(x,\tau) = F(x) \cdot (\sin(k \cdot \tau) + 1)$$

Der Detektor DE integriert den In-Phase D1(x) und den Außer-Phase-Anteil D2(x) über die Pixelverweilzeit t und die aufintegrierten Einzelsignale werden anschließend voneinander abgezogen, wodurch sich folgender analytischer Ausdruck für das integrierte Meßsignal S(x,t --> unendlich) bei Annahme einer cosinusförmigen Strukturierung ergibt:

*Meßsignal* :

$$S(x,t) = \int_0^t D_1(x,\tau)d\tau - \int_0^t D_2(x,\tau)d\tau$$

$$S(x,t) = \frac{1}{t}\left( \left[ \sin(kt) + \cos(kt) \right] \cdot \left( B(x) + \frac{A(x)}{2}\cos(kt) + A(x) \right) + \frac{A(x)t}{2} - B(x) - \frac{3A(x)}{2} \right)$$

$$S(x, t \to \infty) = A(x)/2$$

Das Messsignal S entspricht für große Pixelverweilzeiten t dem halben Signal aus dem optischen Schnittbild, d.h. der gewünschten Information ohne Hintergrundsignal, das aus Ebenen außerhalb des Fokus entsteht.

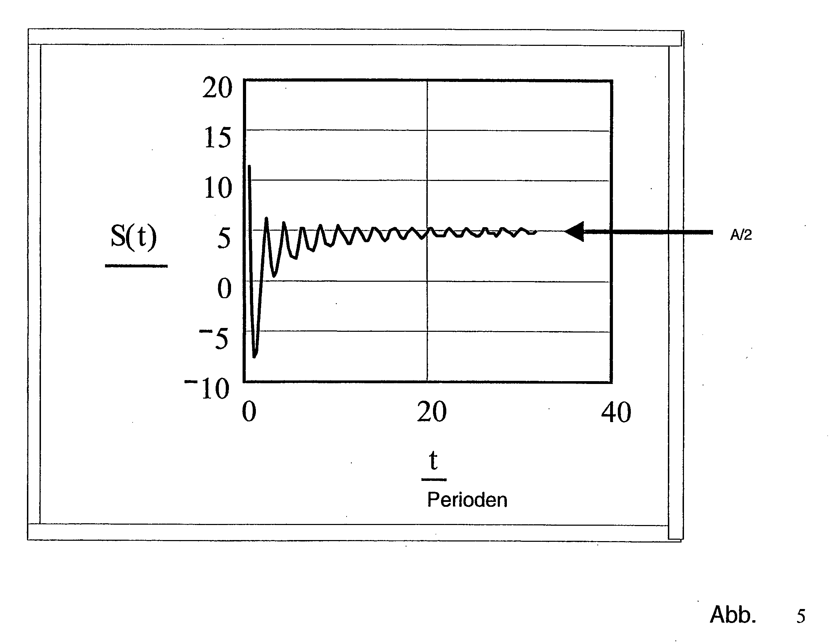

Abb. 5 zeigt die Abhängigkeit des Messsignals S(t) von der Pixelverweilzeit t hier für einen konstanten Ortspunkt x. Zu erkennen ist, dass das Messsignal S für Pixelverweilzeiten t von größer 10 Perioden k bereits dem Signal aus dem konfokalen Schnittbild A/2 entspricht.

Die Verschiebung der Struktur relativ zur Probe kann beispielsweise durch eine Verschiebung des Gitters G in x-Richtung oder durch eine Bewegung des Scanners SC in der Koordinate, die eine Verschiebung entlang der x-Koordinate auf der Probe erzeugt, erfolgen.

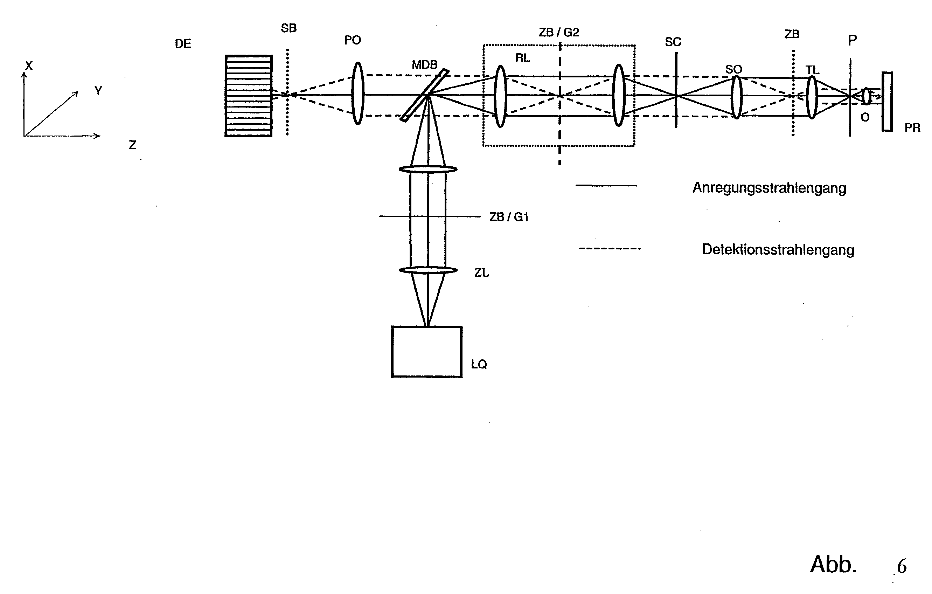

Bei Verwendung eines Amplitudengitters gehen im Normalfall 50% der Energie des Anregungslichts verloren. Zur Erhöhung der Transmissionseffizienz im Anregungsstrahlengang (siehe Abb. 6) kann zusätzlich vor dem bereits in Fig.4 beschriebenen Amplitudengitter , hier G2 und in Richtung der Lichtquelle zur Erzeugung einer Interferenzstruktur am Ort G2 ein Phasengitter oder auch Amplitudengitter G1 mit gleicher Gitterfrequenz des Amplitudengitters G2 in eine weitere zum Amplitudengitter G2 konjugierte Zwischenbildebene im Anregungsstrahlengang, die mit einer weiteren Relayoptik (nicht eingezeichnet) erzeugt wird, eingeschaltet werden. Hierdurch wird die Energie des Anregungslichts entsprechend so umverteilt, dass eine effizientere Abbildung durch das Amplitudengitter G2 erfolgt. Ein weiterer Vorteil ist, dass weniger Streulicht vom Anregungslicht an G2, das in Richtung Detektor gelangen könnte, minimiert wird. Bei Beleuchtung der Probe über eine Interferenzstruktur , vorteilhaft wie dargestellt zwischen Lichtquelle und MDB kann das Gitterelement G2 an seiner Stelle verbleiben oder auch in ein Zwischenbild (SB) vor dem Detektor gelegt werden und so erfindungsgemäß für das von der Probe kommende Licht wirken.

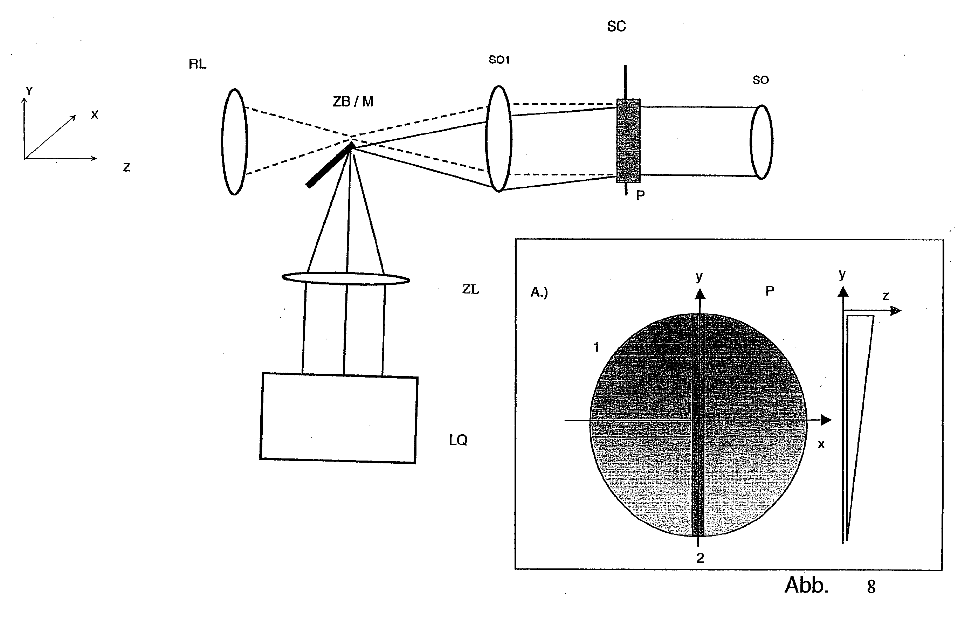

Abb. 7 zeigt eine weitere vorteilhafte Anordnung zur Trennung der Anregungsstrahlung von der Detektionsstrahlung. Die räumliche Trennung erfolgt hierbei in einem Zwischenbild ZB / M, wobei eine Verkippung der Detektionsstrahlung bzw. der Anregungsstrahlung mit einem prismatischen Element PR (Das Element wird detailliert weiter unten anhand von Abb. 8 erläutert) erfolgt. Der Vorteil der Anordnung liegt in der Verwendung der zumeist hochkorrigierten Optik RL für den Anregungs- und den Detektionsstrahlengang.

In Abb. 7 ist das Gitter zur Strukturierung in einer Zwischenbildebene ZB/G (siehe Pfeil) zwischen Tubuslinse TL und Scanner SC eingezeichnet. Das Schieben der Struktur relativ zur Probe kann durch eine Verschiebung der Struktur oder durch den Einsatz einer Wackelplatte erfolgen.

Das Gitter G zur Strukturierung kann jedoch auch in einem Zwischenbildebene zwischen den Scannern SC und dem prismatischen Element P angeordnet werden (nicht gezeichnet). Dies kann beispielsweise durch den Einsatz einer zusätzlichen Relayoptik zur Generierung der zusätzlichen Zwischenbildebene geschehen. Dies hat den Vorteil, dass die Scanlinie nicht über das Gitter gescannt wird, wodurch es zu Intensitätsschwankungen z.B. durch Ungleichmäßigkeiten auf dem Gitter kommen kann. Das Schieben der Struktur relativ zur Probe kann dann auch durch einen Scanner SC erfolgen.

Die Relayoptik RL kann auch weglassen und der Detektor DE direkt in der Ebene ZB/M angeordnet werden, wodurch sich der optische Aufbau noch weiter vereinfacht.

Abb. 8 zeigt die Wirkung des prismatischen Elements im Detail in der yz-Ebene. Dargestellt sind die Elemente Scanoptik SO, prismatisches Element PR / SC Scanoptik SO1, Spiegel M in der ebene ZB/M zur Ausspieglung des Anregungslicht. Eine beispielhafte Ausbildung des Elements P ist im Teilbild 8A.) vergrößert dargestellt in der xy-Ebene und der yz-Ebene. Die rechte Darstellung stellt einen Schnitt durch das Element PR in einem Bereich 1 außerhalb des Bereiches 2 dar.

Das Element ist transmittiv, wobei die Bereiche 1 (im Verlauf dargestellter Bereich) prismatisch angeschliffen sind. Der Bereich 2 ist planparallel (dunkler dargestellter Bereich). Dadurch wird die Strahlung, die auf den Bereich 2 fällt (Anregungsstrahlung) gegenüber der Strahlung die auf den Bereich 1 fällt (Detektionsstrahlung), senkrecht zur Scanlinie (in der y-Achse) abgelenkt und zusätzlich spektral aufgespalten. Im Zwischenbild gelangen die verschieden abgelenkten Spektralkomponenten des Detektionslichts (von Bereich 1) und das Anregungslicht (von Bereich 2) an verschiedene Orte, so dass das Anregungslicht und das Detektionslicht räumlich separiert werden können. Die im Zwischenbild ZB/M räumlich separierten Spektralkomponenten können im Anschluß mit einem Detektorarray spektral vermessen werden, der z.B. in Abb. 7 in der X-Y Ebene angeordnet ist. Die Detektorelemente entlang der Y Koordinate messen hierbei die spektrale Information und die Elemente entlang der X-Achse die Informationen entlang der Scanlinie, d.h. die ortsaufgelöste Information. Die Bereiche 1 und 2 auf dem prismatischen Element PR können prinzipiell auch vertauscht werden. Dadurch erfolgt eine spektrale Aufspaltung der Anregungsstrahlung, die mit aus dem Stand der Technik bekannten Mitteln wieder kompensiert oder zur Vereinigung von Spektralkomponenten der Lichtquelle verwendet werden kann. Weiterhin kann das transmittive Element P auch durch geeignete Spiegelanordnungen ersetzt werden.

**Patentansprüche**

1.  Verfahren zur tiefenaufgelösten optischen Erfassung einer Probe mit einer auf oder in einer Probe erzeugten Beleuchtungslichtverteilung mindestens einer Wellenlänge und Detektion insbesondere des aufgrund von Wechselwirkung mit der Probe beeinflußten Lichtes, insbesondere Fluoreszenzlichtes und / oder reflektierten Lichtes und / oder Lumineszenzlichtes und / oder gestreuten und / oder transmittierten Lichtes, wobei das Beleuchtungslicht eine Modulation in zumindest einer Raumrichtung aufweist und das wie das Beleuchtungslicht modulierte Detektionslicht in zwei Anteile, die zueinander eine Phasenverschiebung aufweisen, räumlich aufgeteilt wird, und mindestens ein in-Phase Anteil oder außer- Phase Anteil zur Aufnahme eines optischen Schnittbildes vermessen wird.

2.  Verfahren nach Anspruch 1, wobei die Phasenverschiebung Pi beträgt.

3.  Verfahren nach Anspruch 1 oder 2 , wobei das Detektionslicht in zwei Anteile, die zueinander eine Phasenverschiebung aufweisen, räumlich aufgeteilt wird, diese getrennt vermessen und aus ihnen ein optisches Schnittbild der Probe und/ oder eines Probenteils berechnet wird.

4.  Verfahren nach einem der vorangehenden Ansprüche , wobei die detektierten Anteile mit einer Phasenverschiebung voneinander subtrahiert werden.

5.  Verfahren nach einem der vorangehenden Ansprüche , wobei die Modulation durch Aufprägen mindestens einer zumindest eindimensional räumlich periodischen Struktur erfolgt.

6.  Verfahren nach einem der vorangehenden Ansprüche , wobei die räumlich periodische Struktur durch eine Gitteranordnung im erzeugt wird, die sowohl vom Beleuchtungslicht als auch vom Probenlicht bestrahlt wird.

7.  Verfahren nach einem der vorangehenden Ansprüche , wobei die Gitteranordnung Bereiche mit niedriger Transmission in Bezug auf das Beleuchtunglicht aufweist, die in Richtung der Probe reflektierend ausgebildet sind und durch eine winklige Anordnung des Elements eine Aufteilung des entlang der Beleuchtungszeile modulierten Detektionslichts in zwei Anteile erfolgt, deren Strukturen zueinander eine Phasenverschiebung aufweisen.

8.  Verfahren nach einem der vorangehenden Ansprüche , wobei im Beleuchtungs- und im Detektionsstrahlengang jeweils eine Gitteranordnung mit gleicher Gitterperiode vorgesehen ist.

9.  Verfahren nach einem der vorangehenden Ansprüche , wobei eine scannende Bewegung der Beleuchtung relativ zur Probe erfolgt

10. Mikroskopische Anordnung zur Erzeugung von konfokalen Schnittbildern, insbesondere zur Durchführung des Verfahrens nach einem der vorangehenden Ansprüche, wobei eine Struktur vorgesehen ist, mit der eine strukturierte Beleuchtung der Probe erfolgt und das Probenlicht die Struktur und/ oder eine weitere im wesentlichen gleiche Struktur durchläuft und eine räumliche Aufteilung des entlang der Beleuchtungszeile modulierten Detektionslichts in zwei Anteile erfolgt, deren Strukturen zueinander eine Phasenverschiebung aufweisen, und mindestens der in-Phase Anteil oder außer Phase Anteil zur Aufnahme eines optischen Schnittbildes vermessen wird.

**11.** Anordnung nach Anspruch 10, wobei die Phasenverschiebung Pi beträgt

**12.** Anordnung nach einem der vorangehenden Ansprüche , wobei
die Anteile parallel detektiert werden und aus den Detektionssignalen eine Berechnung von Schnittbildern erfolgt.

**13.** Anordnung nach einem der vorangehenden Ansprüche , wobei
eine Relativbewegung von Struktur und Probe zueinander erfolgt.

**14.** Anordnung nach einem der vorangehenden Ansprüche , wobei
eine Messung der Anteile in zwei Regionen eines Detektors oder zwei getrennten Detektoren in einer zur Probe konjugierten Ebene erfolgt.

**15.** Anordnung nach einem der vorangehenden Ansprüche , wobei
eine Subtraktion der Detektorsignale der Anteile erfolgt.

**16.** Anordnung nach einem der vorangehenden Ansprüche in einem Laser Scanning Mikroskop

**17.** Anordnung nach Anspruch 16, mit linienförmiger Beleuchtung.

**18.** Anordnung nach einem der vorangehenden Ansprüche in einem Weitfeldmikroskop.

**19.** Anordnung nach einem der vorangehenden Ansprüche , wobei
im Beleuchtungslicht mindestens ein Amplitudengitter oder ein Phasengitter oder ein Interferenzmuster vorgesehen ist

**20.** Anordnung nach einem der vorangehenden Ansprüche , wobei
im Detektionslicht ein Amplitudengitter mit im wesentlichen gleicher Struktur wie die Struktur im Beleuchtungslicht vorgesehen ist

**21.** Prismatisches Element , insbesondere nach einem der vorangehenden Ansprüche, mit mindestens einer Region die planparallel und einer zweiten prismatischen Region die eine Winkelablenkung zwischen dem Anregungsvom Detektionslicht vornimmt und das
in einer Pupillenebene eines Mikroskopes angeordnet ist.

**22.** Prismatisches Element nach einem der vorangehenden Ansprüche, wobei
eine räumliche Separation des Detektionslichts vom Anregungslicht in einer Zwischenbildebene erfolgt.

**23.** Prismatisches Element nach einem der vorangehenden Ansprüche, wobei
durch die Prismatische Fläche des Elements eine räumliche Separierung der Spektralkomponenten des Probensignals erfolgt und diese mit einem Detektorarray vermessen werden.

**24.** Prismatisches Element nach einem der vorangehenden Ansprüche, wobei
durch die Prismatische Fläche des Elements eine räumliche Separierung der Spektralkomponenten des Anregungslichts erfolgt und die Spektralkomponenten zu einem gemeinsamen Strahl in der Probe zusammengeführt werden.

**25.** Prismatisches Element nach einem der vorangehenden Ansprüche, wobei
das prismatischen Element in der Mitte eine planparallele Platte aufweist und außerhalb der Platte prismatisch ausgebildet ist.

**26.** Prismatisches Element nach einem der vorangehenden Ansprüche, wobei
bei einem Linienscanner die planparallele Platte eine längliche Form aufweist und eine keilförmige Abnahme der primatischen Anordnung in Längsrichtung der Platte vorliegt.

## Strukturierte Beleuchtung - Stand der Technik

Phasenbild (PB)

$\Phi = 0°$

$\Phi = 120°$

$\Phi = 240°$

Image Processing

optisches Schnittbild

EP 1 420 281 A2

Abb. 1

Abb. 2

A.)

B.)

Anregungsstrahlengang

Detektionsstrahlengang

Abb. 3

x

y

HR

HT

EP 1 420 281 A2

Y X
Z

DE   SB   PO   RL

D1   INT   2   1   ST

S   a

D2   INT   b   Vollspiegel SP 2

MDB

ZB / G

DE

Y

In phase

Abb.4a

Out of phase

X

Abb.   4

Abb. 5

Abb. 6

A.)

X
Y
Z

DE RL ZB / M SO1 SC SO ZB P

MDB

TL O

PR

——————— Anregungsstrahlengang

- - - - - - - - Detektionsstrahlengang

B.)

Y
X
Z

DE RL ZB / M SO1 SC SO ZB P

TL O

PR

ZL

P

ZB / G

LQ

EP 1 420 281 A2

Abb. 7

EP 1 420 281 A2

RL

ZB / M

SO1

SC

SO

P

Y
X
Z

ZL

LQ

A.)

P

y

x

y

z

1

2

Abb. 8